# EUROPEAN PATENT SPECIFICATION

(11) **EP 2 822 055 B1**
(45) Date of publication and mention of the grant of the patent: **27.12.2017**
(21) Application number: 12870127.3
(22) Date of filing: 29.02.2012
(51) Int. Cl.: H01M 2/02, H01M 2/06, H01M 2/08, H01M 2/26, H01M 2/30

(54) **EXTERIOR MATERIAL FOR LAMINATED BATTERY, METHOD FOR MANUFACTURING EXTERIOR MATERIAL FOR LAMINATED BATTERY, METHOD FOR MANUFACTURING LAMINATED BATTERY AND LAMINATED BATTERY**
AUSSENMATERIAL FÜR EINE BESCHICHTETE BATTERIE, VERFAHREN ZUR HERSTELLUNG DES AUSSENMATERIALS FÜR DIE BESCHICHTETE BATTERIE, VERFAHREN ZUR HERSTELLUNG DER BESCHICHTETEN BATTERIE UND BESCHICHTETE BATTERIE
MATÉRIAU EXTERNE POUR BATTERIE STRATIFIÉE, PROCÉDÉ POUR FABRIQUER UN MATÉRIAU EXTERNE POUR BATTERIE STRATIFIÉE, PROCÉDÉ POUR FABRIQUER UNE BATTERIE STRATIFIÉE ET BATTERIE STRATIFIÉE

(43) Date of publication of application: 07.01.2015
(73) Proprietor: Nisshin Steel Co., Ltd., Chiyoda-ku, Tokyo 100-8366 (JP)
(72) Inventor: OZAWA, Kazunori, Tokyo 112-0003 (JP); OZAWA, Yasunori, Yonezawa-shi Yamagata 992-0003 (JP); HONMA, Yusuke, Yonezawa-shi Yamagata 992-0003 (JP); KON, Norihiro, Yonezawa-shi Yamagata 992-0003 (JP); YOSHIDA, Yoshie, Yonezawa-shi Yamagata 992-0003 (JP); MIURA, Norimasa, Sakai-shi Osaka 592-8332 (JP); NORITA, Katsunari, Sakai-shi Osaka 592-8332 (JP); KOURA,Setsuko, Tokyo 100-8366 (JP)
(74) Representative: Patentanwälte Geyer, Fehners & Partner mbB
(86) International application number: PCT/JP2012/055086
(87) International publication number: WO 2013/128594

(56) References cited:
- EP-A1- 1 180 480
- EP-A2- 2 075 808
- JP-A- 2000 173 562
- JP-A- 2006 196 217
- JP-A- 2007 242 548
- JP-A- 2010 165 481
- JP-A- 2011 076 953
- US-A1- 2003 031 828

## Description

### TECHNICAL FIELD

The present invention relates to an external packaging material for a laminated battery and a manufacturing method for a laminated battery, and more particularly to a novel improvement for avoiding the appearance of a gap between an external packaging material and a tab and more reliably ensuring the sealability of a battery case by forming, in the external packaging material in advance, a stepped portion that conforms to the cross-sectional shape of a tab at the position where the tab is inserted between the external packaging materials, before the tab is inserted.

### BACKGROUND ART

Laminated batteries in which a battery element is sealed by an external packaging material (laminated sheet) have recently attracted attention as a one feature of secondary battery such as lithium batteries. Configuration examples of such laminated batteries are described in Patent Documents 1 and 2.

Patent Document 1 discloses a manufacturing method for a laminated battery in which a pair of aluminum sheets each provided with a resin layer is used as external packaging materials, and the resin layers of the external packaging materials are fused together by applying heat (performing a heat sealing step) to the external packaging materials, while pressing the external packaging materials against each other, in a state in which tabs (draw-out terminals of a positive electrode and a negative electrode) connected to a battery element are disposed between the external packaging materials. However, the problem arising when aluminum sheet is used as a base material for the external packaging material is that since aluminum is a soft metal, the strength is insufficient and long-term durability is difficult to ensure.

Meanwhile, Patent Document 2 discloses a manufacturing method for a laminated battery similar to that of the aforementioned Patent Document 1 by using external packaging materials having stainless steel sheet as a base material. By using the external packaging material with stainless steel sheet as a base material, as in the configuration described in Patent Document 2, it is possible to configure a laminated battery with increased strength and long-term durability. Further Patent Document 2 discloses an external packaging material for a laminated battery with the features of the preamble of claim 1.

Patent Document 1: Japanese Patent Application Publication No. 2002-190283
Patent Document 2: Japanese Patent Application Publication No. 2006-196217

When an external packaging material is used in which aluminum sheet serves as a base material, as in Patent Document 1, since aluminum is a soft metal, the external packaging material can be made close in shape to the tab by the pressure applied during a heat sealing step, and the sealability of the battery case can be ensured. However, when an external packaging material is used in which stainless steel serves as a base material, as in Patent Document 2, since stainless steel is a hard metal, the shape of the external packaging material cannot be frozen only by the pressure applied during the heat sealing step and a gap appears between the external packaging material and the tab due to springback.

Thus, the conventional configuration described in the aforementioned Patent Document 2 uses an external packaging material with stainless steel sheet as a base material and the sheet surface of the external packaging material is deformed according to the tab shape by the pressure applied during the heat sealing step. Therefore, a gap appears between the external packaging material and the tab and sealability of the battery case is difficult to ensure.
EP 2 075 808 A2 discloses an external packaging material in which a stepped portion is formed in advance before the tab is inserted, wherein the packaging material is a one piece with an opening.
EP 1 180 480 A1 discloses a packaging material comprising aluminum and resin, wherein a stepped portion in the packaging material is not formed before the tab insertion.

### DISCLOSURE OF THE INVENTION

The present invention has been created to resolve the above-described problem, and it is an objective thereof to provide an external packaging material for a laminated battery and a manufacturing method for a laminated battery such that the appearance of a gap between the external packaging material and the tab can be avoided and the sealability of the battery case can be more reliably ensured.
The object is solved by an external packaging material with the features of claims 1 to 3 and by a manufacturing method with the features of claims 5 and 6.
Further developments of the invention are given in the dependent claims.

With the external packaging material for a laminated battery and the manufacturing method for a laminated battery in accordance with the present invention, a stepped portion conforming to the cross-sectional shape of the tabs at a position where the tabs are inserted between the external packaging materials is formed in advance in the external packaging material before the tabs are inserted. Therefore, the shape of the stepped portion can be frozen i.e. the shape can be fixed more reliably, and the occurrence of springback after the heat sealing method has been implemented can be avoided. As a result, the appearance of a gap between the external packaging material and the tabs can be avoided and the sealability of the battery can be more reliably ensured.

### BRIEF DESCRIPTION OF THE DRAWINGS

FIG. 1 is a perspective view of the laminated battery according to Embodiment 1 of the present invention.
FIG. 2 is an exploded perspective view of the laminated battery shown in FIG. 1.
FIG. 3 is a cross-sectional view of the first and second external packaging materials shown in FIG. 2.
FIG. 4 is a perspective view of the tab shown in FIG. 2.
FIG. 5 is a cross-sectional view taken along the V-V line in FIG. 4.
FIG. 6 is a cross-sectional view of the stepped portion shown in FIG. 2.
FIG. 7 is a flowchart illustrating the manufacturing method for a laminated battery that is used for manufacturing the laminated battery shown in FIG. 1.
FIG. 8 is a cross-sectional view of the circumference of the stepped portion in the case of using the first and second external packaging materials on which the stepped portion shown in FIG. 6 has been formed.
FIG. 9 is an explanatory drawing illustrating Comparative Example 1 in which a stepped portion is formed that differs in shape from the stepped portion shown in FIG. 6.
FIG. 10 is an explanatory drawing illustrating Comparative Example 2 in which a stepped portion is formed that differs in shape from the stepped portion shown in FIG. 6.
FIG. 11 is an explanatory drawing illustrating a variation example of the first and second external packaging materials shown in FIG. 8.
FIG. 12 is a cross-sectional view of the stepped portion provided at the external packaging material of the laminated battery of Embodiment 2 of the present invention.
FIG. 13 is a cross-sectional view of the circumference of the stepped portion in the case of using the first and second external packaging materials on which the stepped portion shown in FIG. 12 has been formed.
FIG. 14 is a cross-sectional view of a punch and a die for forming the stepped portion shown in FIG. 12.
FIG. 15 is cross-sectional view of a stepped portion provided at the external packaging material of the laminated battery according to Embodiment 3 of the present invention.
FIG. 16 is a cross-sectional view of the circumference of the stepped portion in the case in which the first and second external packaging materials are used at which the stepped portion shown in FIG. 15 has been formed.

### BEST MODE FOR CARRYING OUT THE INVENTION

Modes for carrying out the present invention are explained below with reference to the appended drawings.

### Embodiment 1

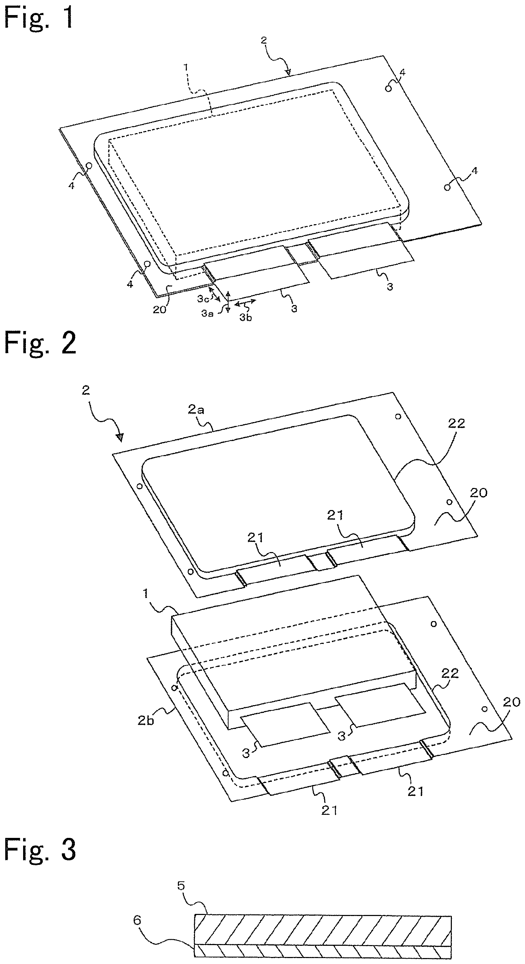

FIG. 1 is a perspective view of a laminated battery according to Embodiment 1 of the present invention. In the figure, a battery element 1 is stored in a battery case 2. The battery element 1 is a laminate of a positive electrode, a negative electrode and a separator which is impregnated with an electrolytic solution, as in the well-known configuration. A pair of tabs 3 (draw-out terminals of the positive electrode and negative electrode) are connected to the battery element 1. The tabs 3 are drawn out to the outside of the battery case 2 and connected to an external power supply or an external load (not shown in the figure). A plurality of mounting holes 4 are provided in the battery case 2. The mounting holes 4 serve, for example, for mounting the laminated battery on an object of attachment such as an electric automobile.

Further, FIG. 2 is an exploded perspective view of the laminated battery shown in FIG. 1. In the figure, a first external packaging material 2a and a second external packaging material 2b constitute the battery case 2 shown in FIG. 1. The battery case 2 shown in FIG. 1 is formed by joining together the first and second external packaging materials 2a, 2b in a state in which the tabs 3 connected to the battery element 1 are disposed therebetween.

A joining portion 20, a pair of stepped portions 21, and a battery element accommodation portion 22 are provided at the first and second external packaging materials 2a, 2b. The joining portion 20 is a flat portion provided on substantially entire outer circumference of the first and second external packaging materials 2a, 2b. The joining portions 20 are used for directly joining the first and second external packaging materials 2a, 2b to each other.

The stepped portions 21 are processed to stretch out from the joining portion 20 in part of the outer circumference of the first and second external packaging materials 2a, 2b. The stepped portions 21 are provided at positions such as to sandwich the tabs 3 when the battery case 2 is formed, and are formed to conform to the cross-sectional shape of the tabs 3 at the positions of insertion in the first and second external packaging materials 2a, 2b. The battery element accommodation portion 22 is processed to stretch out from the joining portion 20 at a substantially central position of the first and second external packaging materials 2a, 2b. The battery element accommodation portion 22 forms a space for accommodating the battery element 1 when the battery case 2 is formed. As will be described hereinbelow, the stepped portions 21 and the battery element accommodation portion 22 are formed in advance before the tabs 3 are inserted between the first and second external packaging materials 2a, 2b (before the below-described heat sealing step is implemented). The shape of the stepped portions 21 conforming to the cross-sectional shape of the tabs 3 is a shape designed such that no gap is present between the stepped portions 21 and the tabs 3 after the below-described heat sealing step has been implemented.

FIG. 3 is a cross-sectional view of the first and second external packaging materials 2a, 2b shown in FIG. 2. As shown in the figure, the first and second external packaging materials 2a, 2b are formed by providing a resin layer 6 on the surface of a stainless steel sheet 5 serving as a base material. The thickness of the stainless steel sheet 5 is about 0.04 mm to 0.40 mm, and the thickness of the resin layer 6 is about 0.02 mm to 0.40 mm. The resin layer 6 is constituted, for example, by polypropylene or polyethylene and melts when heated to a temperature of about 130 degrees Celsius to 200 degrees Celsius. As in the well-known configuration, the battery case 2 shown in FIG. 1 is formed by fusing together the resin layers 6 of the first and second external packaging materials 2a, 2b by implementing the heat sealing step for heating the first and second external packaging materials 2a, 2b, while pressing the first and second external packaging materials 2a, 2b against each other, in a state in which the tabs 3 connected to the battery element 1 are disposed between the first and second external packaging materials 2a, 2b. In order to impart excellent moldability and chemical resistance to the external packaging materials, it is preferred that a stainless steel sheet provided with a lubricating film (not shown in the figure) on the surface on the side opposite that where the resin layer 6 is provided be used for the stainless steel sheet 5.

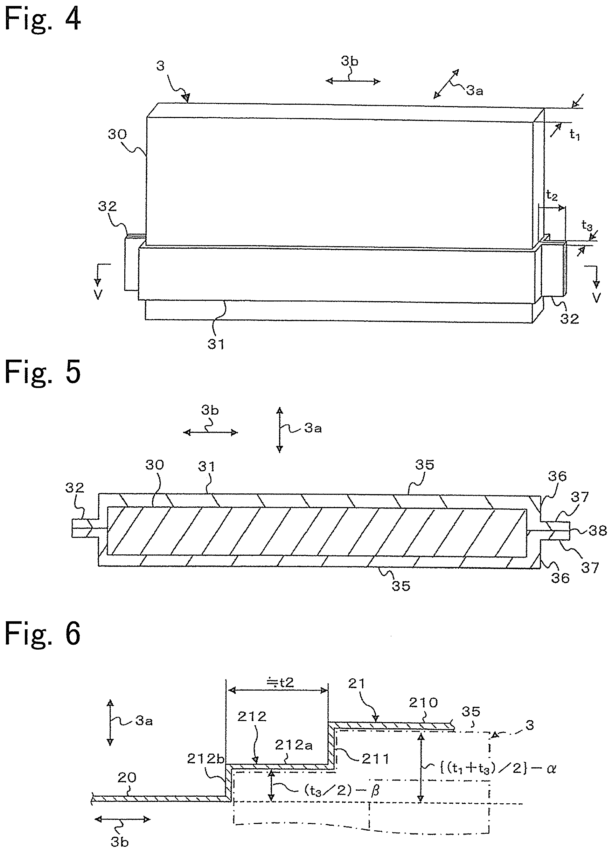

FIG. 4 is a perspective view of a tab 3 shown in FIG. 2. As shown in the figure, the tab 3 includes a tab main body 30 and a film body 31. The tab main body 30 is a band-shaped piece of metal foil and has a thickness t₁ along a thickness direction 3a of the tab 3. The tab main body 30 of the positive electrode is constituted, for example, by aluminum, titanium, or platinum, and the tab main body 30 of the negative electrode is constituted, for example, by copper, nickel, stainless steel, or platinum. The thickness direction 3a of the tab 3 is the direction perpendicular to the joining surface where the joining portions 20 of the first and second external packaging materials 2a, 2b are formed (see FIG. 1).

The film body 31 is formed by pasting a pair of band-shaped films constituted, for example, by polypropylene or polyethylene on the front surface and rear surface of the tab main body 30. The film body 31 is disposed at a position where the film body 31 is inserted between the first and second external packaging materials 2a, 2b, and fused with the resin layer 6 of the stepped portion 21 of the first and second external packaging materials 2a, 2b when the battery case 2 is formed. The film body 31 also functions as an insulating layer along with the resin layer 6 of the stepped portion 21, which electrically insulates the stainless steel sheet 5 of the first and second external packaging materials 2a, 2b and the tab main body 30.

The film body 31 is provided with film protrusions 32 protruding along a width direction 3b of the tab 3 from both ends of the tab main body 30 in the width direction 3b of the tab 3. The film protrusions 32 are formed by pasting together band-shaped films and disposed at the central position of the tab main body 30 in the thickness direction 3a of the tab 3. The film protrusions 32 have a protrusion amount t₂ in the width direction 3b of the tab 3, and a thickness t₃ in the thickness direction 3a of the tab 3. Here, t₃/2 corresponds to the thickness of one band-shaped film. The width direction 3b of the tab 3 is perpendicular to the thickness direction 3a of the tab 3 and an extension direction 3c of the tab 3 from the battery case 2 (see FIG. 1).

FIG. 5 is a cross-sectional view taken along the V-V line in FIG. 4 and shows the cross-sectional shape of the tab 3 at a position where the tab 3 is inserted between the first and second external packaging materials 2a, 2b. As shown in the figure, the cross-sectional shape of the tab 3 at a position of where the tab 3 is inserted between the first and second external packaging materials 2a, 2b is more complex than a simple rectangle because the film protrusions 32 protrude from both sides of the tab main body 30. More specifically, at a position where the tab 3 is inserted between the first and second external packaging materials 2a, 2b, the tab 3 has first tab end surfaces 35, first tab side surfaces 36, second tab end surfaces 37, and second tab side surfaces 38.

The first tab end surfaces 35 are the end surfaces of the film body 31 that extend along the width direction 3b of the tab 3 and overlap the front surface and rear surface of the tab main body 30 across the entire width of the tab main body 30.

The first tab side surfaces 36 are the end surfaces of the film body 31 extending along the thickness direction 3a of the tab 3 from the end portions of the first tab end surfaces 35 at both sides in the width direction 3b of the tab 3. The first tab side surfaces 36 are provided on the planes perpendicular to the first tab end surfaces 35.

The second tab end surfaces 37 are the end surfaces of the film protrusions 32 of the film body 31 extending along the width direction 3b of the tab 3 from the end portions of the first tab side surfaces 36. The second tab end surfaces 37 are provided on a plane perpendicular to the first tab side surfaces 36.

The second tab side surfaces 38 are the end surfaces of the film protrusions 32 of the film body 31 extending along the thickness direction 3a of the tab 3 from the end portions of the second tab end surfaces 37. The second tab side surfaces 38 are provided on a plane perpendicular to the second tab end surfaces 37.

Since the tab 3 has a complex cross-sectional shape at the position where the tab 3 is inserted between the first and second external packaging materials 2a, 2b, it is also necessary to take this shape into account when shaping the stepped portions 21 between which the tab 3 is to be inserted.

FIG. 6 is a cross-sectional view of the stepped portion 21 shown in FIG. 2. In the figure, the stepped portion 21 is provided with a first step end surface portion 210, a first step side surface portion 211, and a connection portion 212. The first step end surface portion 210 is a wall portion extending along the width direction 3b of the tab 3 so as to correspond to the first tab end surface 35 when the stepped portion 21 is placed on the tab 3, as shown by a dot-dash line in the figure. The first step side surface portion 211 is a wall portion extending along the thickness direction 3a of the tab from the end of the first step end surface portion 210 so as to correspond to the first tab side surface 36 (see FIG. 5) when the stepped portion 21 is placed on the tab 3.

The connection portion 212 is a wall portion connecting the end of the joining portion 20 and the end of the first step side surface portion 211. In the present embodiment, the connection portion 212 is constituted by a second step end surface portion 212a and a third step side surface portion 212b. The second step end surface portion 212a is a wall portion extending along the width direction 3b of the tab 3 from the end of the first step side surface portion 211 so as to correspond to the second tab end surface 37 (see FIG. 5) when the stepped portion 21 is placed on the tab 3. The third step side surface portion 212b is a wall portion connected at one end to the second step end surface portion 212a and connected at the other end to the joining portion 20, and extending along the thickness direction 3a of the tab 3 so as to correspond to the second tab side surface 38 when the stepped portion 21 is placed on the tab 3. The joining portion 20 extends along the width direction 3b of the tab from a position outside the second tab side surface 38 following the width direction 3b of the tab 3, this position being set apart, along the width direction 3b and thickness direction 3a of the tab 3, from the end of the first step side surface portion 211 when the stepped portion 21 is placed on the tab 3.

The stretch-out amount of the first step end surface portion 210 with respect to the joining portion 20 is set to the value obtained by adding up the thickness t₁ of the tab main body 30 and the thickness t₃ of the two band-shaped films constituting the film body 31, dividing the sum by 2, and subtracting a predetermined adjustment amount α, that is, as {(t₁ + t₃)/2} - α. The stretch-out amount is made less than (t₁ + t₃)/2 so that the resin layer 6 (see FIG. 2) of the first step end surface portion 210 and the film body 31 of the tab 3 could be more reliably brought into intimate contact with each other when the heat sealing step is performed. The thickness t₃/2 of one band-shaped film is about 0.05 mm to 0.2 mm, but the adjustment amount α is less than the thickness t₃/2 of one band-shaped film and is greater than 0.01 mm.

The stretch-out amount of the third step side surface portion 212b with respect to the joining portion 20 is set the value obtained by dividing the thickness t₃ of the film protrusion 32 (thickness of the two band-shaped films constituting the film body 31) by 2 and subtracting a predetermined adjustment amount β, that is, as (t₃/2) - β. The stretch-out amount is made less than (t₃/2) so that the resin layer 6 (see FIG. 2) of the third step side surface portion 212b and the film body 31 of the tab 3 also could be more reliably brought into intimate contact with each other when the heat sealing step is performed. The adjustment amount β is less than the thickness t₃/2 of one band-shaped film and is greater than 0.01 mm.

The length of the second step end surface portion 212a along the width direction 3b of the tab 3 is substantially equal to the protrusion amount t₂ of the film protrusion 32.

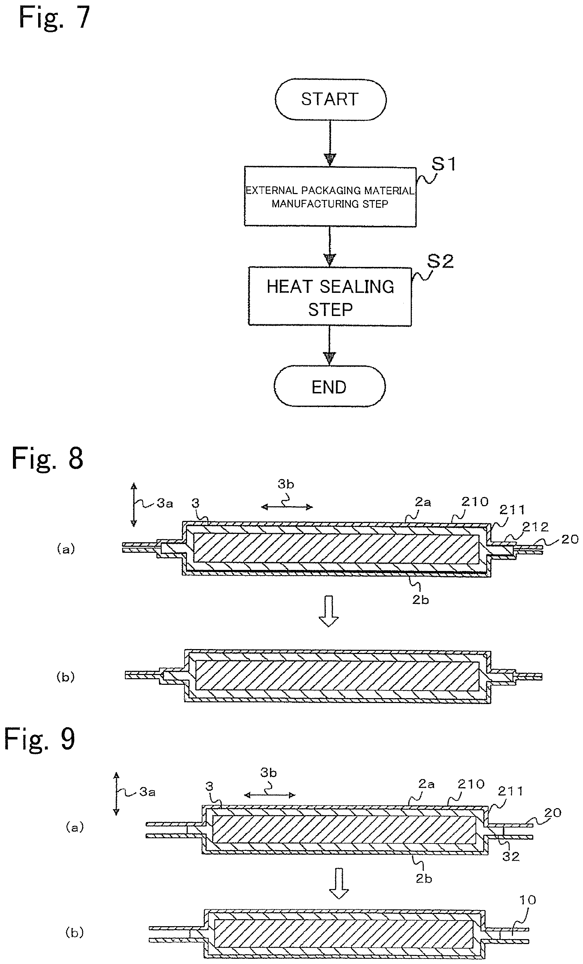

FIG. 7 is a flowchart illustrating the manufacturing method for a laminated battery that is used for manufacturing the laminated battery shown in FIG. 1. As shown in FIG. 7, the manufacturing method for a laminated battery of the present embodiment includes an external packaging material manufacturing step S1 and a heat sealing step S2.

The external packaging material manufacturing step S1 is a step for manufacturing the first and second external packaging materials 2a, 2b that is implemented before the heat sealing step S2. In the external packaging material manufacturing step S1, the first and second external packaging materials 2a, 2b having the joining portion 20, a pair of stepped portions 21, and the battery element accommodation portion 22 are manufactured by press processing a flat sheet material.

In the heat sealing step S2, heat is applied to the first and second external packaging materials 2a, 2b, while the first and second external packaging materials 2a, 2b are pressed against each other, in a state in which the tabs 3 connected to the battery element 1 are disposed between the first and second external packaging materials 2a, 2b. As a result of this step, the resin layers 6 of the first and second external packaging materials 2a, 2b are fused together and the battery case 2 is formed.

Thus, the conventional process uses external packaging materials which are not provided with the stepped portion 21, and the sheet surface of the external packaging material is deformed according to the tab shape by the pressure applied in the heat sealing step. However, in the present embodiment, the stepped portions 21 are formed in advance before the heat sealing step S2 is implemented (before the tab 3 is inserted between the first and second external packaging materials 2a, 2b). As a result, the shape of the stepped portions 21 can be frozen more reliably, and the occurrence of springback after the implementation of the heat sealing step S2 can be avoided. Therefore, the appearance of a gap between the first and second external packaging materials 2a, 2b and the tab 3 can be avoided, and the sealability of the battery case 2 can be more reliably ensured.

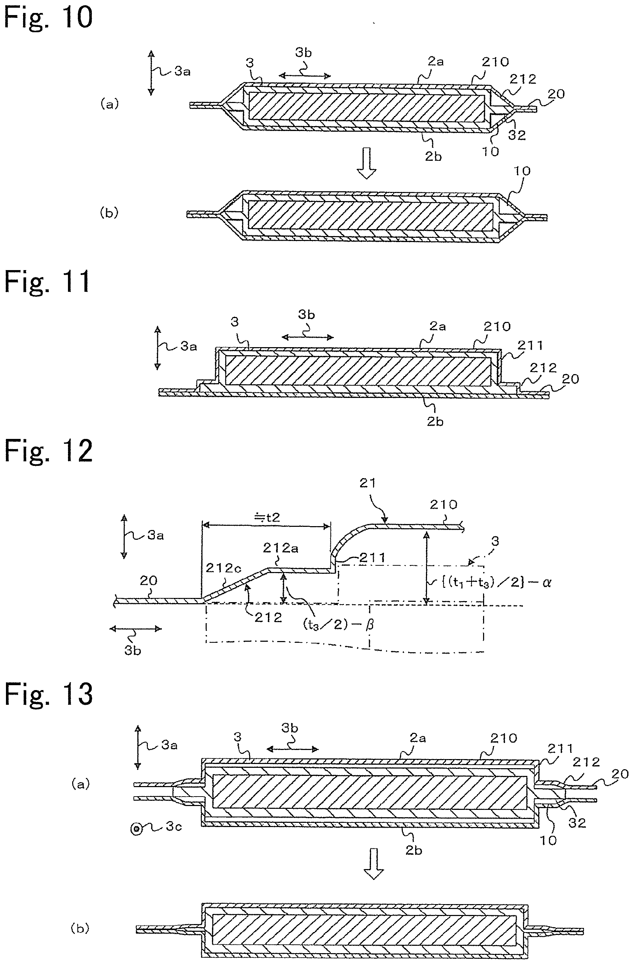

FIG. 8 is a cross-sectional view of the circumference of the stepped portion 21 in the case of using the first and second external packaging materials 2a, 2b on which the stepped portion 21 shown in FIG. 6 has been formed. FIGS. 9 and 10 are explanatory drawings illustrating Comparative Examples 1 and 2 in which a stepped portion is formed that differs in shape from the stepped portion 21 shown in FIG. 6. In FIGS. 8 to 10, (a) shows the state before the heat sealing, and (b) shows the state after the heat sealing.

As shown in FIGS. 8(a) and 8(b), when the first and second external packaging materials 2a, 2b are used at which the stepped portion 21 shown in FIG. 6 has been formed, no gap appears between the stepped portion 21 and the tab 3 after the heat sealing step S2 has been implemented. By contrast, in Comparative Examples 1 and 2 shown in FIGS. 9 and 10, a gap 10 appears between the stepped portion and the tab after the heat sealing step S2 has been implemented.

Comparative Example 1 shown in FIG. 9 represents the configuration in which the connection portion 212 is omitted from the stepped portion 21 shown in FIG. 6, that is, the configuration in which the joining portion 20 is directly connected to the end of the first step side surface portion 211. In the case of such a configuration, the film protrusion 32 is sandwiched by the joining portion 20 of the first external packaging material 2a and the joining portion 20 of the second external packaging material 2b, and the joining portions 20 of the first and second external packaging materials 2a, 2b are not in direct contact with each other. As a result, the gap 10 appears on the outer side of the film protrusion 32 (second tab side surface 38). By contrast, the stepped portion 21 shown in FIG. 6 is configured such that the connection portion 212 connects the end of the first step side surface portion 211 with the end of the joining portion 20 extending along the width direction 3b of the tab 3 from the position outside the second tab side surface 38 extending along the width direction 3b of the tab 3, this position being set apart, in the width direction 3b and thickness direction 3a of the tab 3, from the end of the first step side surface portion 211 when the stepped portion 21 is placed on the tab 3. Because of such a configuration of the connection portion 212, the insertion of the film protrusion 32 caused by the joining portion 20 is avoided and the appearance of the gap 10 on the outer side of the film protrusion 32 is avoided.

Comparative Example 2 shown in FIG. 10 represents the configuration in which the first step side surface portion 211 is omitted from the stepped portion 21 shown in FIG. 6, that is, the configuration in which the end of the first step end surface portion 210 and the end of the joining portion 20 extending from the outer side of the film protrusion 32 are connected by the connection portion 212 composed of a tilted surface. In the case of such a configuration, a large gap 10 appears between the connection portion 212 and the film protrusion 32 before the heat sealing step S2, and this gap 10 cannot be eliminated even after the heat sealing step S2. By contrast, in the stepped portion 21 shown in FIG. 6, the first step side surface portion 211 is provided to extend from the end of the first step end surface portion 210 along the thickness direction 3a of the tab 3, so as to follow the first tab side surface 36, when the stepped portion 21 is placed on the tab 3. With such a configuration of the first step side surface portion 211, the appearance of a large gap 10 at both sides of the film protrusion 32 extending along the thickness direction 3a of the tab 3 is avoided and the gap 10 is prevented from remaining after the heat sealing step S2.

FIG. 11 is an explanatory drawing illustrating a variation example of the first and second external packaging materials 2a, 2b shown in FIG. 8. FIG. 8 shows the first and second external packaging materials 2a, 2b for the case in which the film protrusion 32 is disposed at the central position of the tab main body 30 in the thickness direction 3a of the tab 3, as shown in FIG. 5, but the configuration can be also used in which the film protrusion 32 is formed at one end of the tab main body 30 in the thickness direction 3a of the tab 3, as shown in FIG. 11. In such a case, the stepped portion 21 is provided at either of the first and second external packaging materials 2a, 2b, as shown in FIG. 11. Thus, the stepped portion 21 may be provided in at least one of the first and second external packaging materials 2a, 2b according to the form of the film protrusion 32.

In such first and second external packaging materials 2a, 2b of a laminated battery, manufacturing method for a laminated battery, and laminated battery, the stepped portion 21 conforming to the cross-sectional shape of the tab 3 at a position at which the tab is inserted between the first and second external packaging materials 2a, 2b is formed in advance in at least one of the first and second external packaging materials 2a, 2b before the tab 3 is inserted between the first and second external packaging materials 2a, 2b. Therefore, the shape of the stepped portion 21 can be frozen more reliably, and the occurrence of springback after the heat sealing step S2 has been implemented can be avoided. As a result, the appearance of the gap 10 between the first and second external packaging materials 2a, 2b and the tab 3 can be avoided and the sealability of the battery case 2 can be more reliably ensured.

Further, the stepped portion 21 is provided with the first step end surface portion 210 extending along the width direction 3b of the tab 3 so as to correspond to the first tab end surface 35 when the stepped portion 21 is placed on the tab 3; the first step side surface portion 211 extending along the thickness direction 3a of the tab 3 from the end of the first step end surface portion 210 so as to correspond to the first tab side surface 36 when the stepped portion 21 is placed on the tab 3; and the connection portion 212 connecting the end of the first step side surface portion 211 and the end of the joining portion 20 extending along the width direction 3b of the tab 3 from a position outside the second tab side surface 38 following the width direction 3b of the tab 3, which is a position set apart, along the width direction 3b and thickness direction 3a of the tab 3, from the end of the first step side surface portion 211, when the stepped portion 21 is placed on the tab 3. Therefore, even when the tab 3 has a comparatively complex cross-sectional shape because of the protrusion of film protrusions 32 from both ends of the tab main body 30, the appearance of the gap 10 between the first and second external packaging materials 2a, 2b and the tab 3 can be avoided more reliably, and the reliability of the battery case 2 can be increased.

Further, the connection portion 212 is provided with a second step end surface portion 212a extending along the width direction 3b of the tab 3 from the end of the first step side surface portion 211 so as to correspond to the second tab end surface 37 when the stepped portion 21 is placed on the tab 3, and a third step side surface portion 212b which is connected at one end to the end of the second step end surface portion 212a and connected at the other end to the end of the joining portion 20, and extends along the thickness direction 3a of the tab 3 so as to correspond to the second tab side surface 38 when the stepped portion 21 is placed on the tab 3. Therefore, the stepped portion 21 can be brought into intimate contact with the tab 3 before the heat sealing step S2 is implemented, and the occurrence of the gap 10 between the first and second external packaging materials 2a, 2b and the tabs 3 can be avoided more reliably.

In addition, the shape of the stepped portion 21 is determined with consideration for the presence of the film protrusion 32 in Embodiment 1, but when the film body is not provided with the film protrusion and the cross-sectional shape of the tab at the position where the tab is inserted between the external packaging materials is a simple quadrangular shape, even the stepped portion explained with reference to FIG. 9 has a shape conforming to the cross-sectional shape of the tab. In this case, the occurrence of springback after the implementation of the heat sealing step can be avoided and the appearance of a gap between the external packaging materials and the tab can be avoided by forming a stepped portion in advance on the external packaging material before the tab is inserted between the external packaging materials.

### Embodiment 2

FIG. 12 is a cross-sectional view of the stepped portion 21 provided at the external packaging materials 2a, 2b of the laminated battery according to Embodiment 2 of the present invention. The components identical or similar to those of the configuration of Embodiment 1 are explained by using like reference numerals. In Embodiment 1, the connection portion 212 is configured by the second step end surface portion 212a and the third step side surface portion 212b, but in Embodiment 2, as shown in FIG. 12, the connection portion 212 is configured by the second step end surface portion 212a and a tilted portion 212c. The tilted portion 212c is constituted by a tilted surface connecting the end of the second step end surface portion 212a and the end of the joining portion 20.

If the third step side surface portion 212b which is bent at a right angle from the second step end surface portion 212a can be formed as in the configuration of Embodiment 1 (configuration shown in FIG. 6), the stepped portion 21 can be brought into intimate contact with the tab 3 before the heat sealing step S2 is implemented. However, at a certain thickness t₃ of the film protrusion 32, the processing of the connection portion 212 is extremely fine and the shape is difficult to freeze even when the third step side surface portion 212b is formed by bending the sheet material at a right angle. Accordingly, in the present embodiment, the amount of the sheet material processed can be reduced and the shape can be frozen more reliably by providing the tilted portion 212c instead of the third step side surface portion 212b.

FIG. 13 is a cross-sectional view of the circumference of the stepped portion 21 in the case of using the first and second external packaging materials 2a, 2b on which the stepped portion 21 shown in FIG. 12 has been formed. As shown in FIG. 13(a), in the case of the stepped portion 21 shown in FIG. 12, the gap 10 appears on the circumference of the film protrusion 32 as a result of the corner portion of the film protrusion 32 abutting against the tilted portion 212c at a stage before the heat sealing step S2 is implemented. Where the heat sealing step S2 is implemented, the film body 31 is melted and deformed according to the shape of the stepped portion 21, as shown in FIG. 13(b).

In this case, the cross-sectional area of the space demarcated by the connection portions 212 of the first and second external packaging materials 2a, 2b and the line segments connecting the proximal ends of the connection portions 212 when the joining portions 20 of the first and second external packaging materials 2a, 2b are brought into contact with each other is less than the cross-sectional area of the film protrusion 32. When the heat seal step S2 is implemented as shown in FIG. 13(b), this space is filled with the molten film protrusion 32. Thus, as shown in FIG. 12, even when the connection portion 212 is constituted by the second step end surface portion 212a and the tilted portion 212c, the occurrence of the gap 10 can be avoided, and sealability of the battery case 2 can be ensured.

When the heat sealing step S2 is implemented, the tilted surface of the tilted portion 212c is pressed against the film protrusion 32, thereby a pressure is generated that causes the melt of the film protrusion 32 to move inward along the width direction 3b of the tab 3. Therefore, a larger portion of the melt of the film protrusion 32 that has not been accommodated in the aforementioned space is pushed inside or outside of the battery case 2 along the extension direction 3c of the tab 3, without penetrating between the joining portions 20.

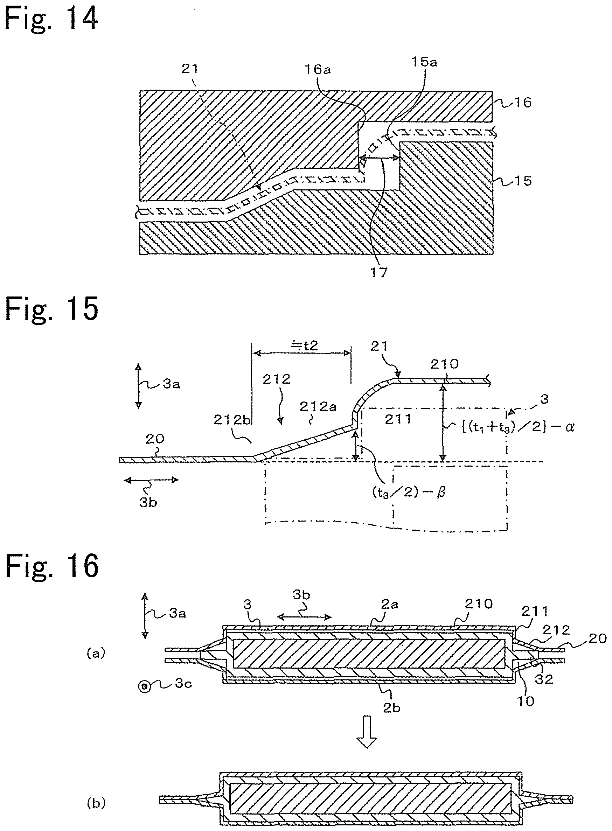

FIG. 14 is a cross-sectional view of a punch 15 and a die 16 for forming the stepped portion 21 shown in FIG. 12. The stepped portion 21 shown in FIG. 12 is formed by press processing using the punch 15 and the die 16 shown in FIG. 14. A punch side wall surface 15a and a die side wall surface 16a corresponding to the first step side surface portion 211 are formed in those punch 15 and die 16. A clearance 17 between the punch side wall surface 15a and the die side wall surface 16a is larger than the sheet thickness of the first and second external packaging materials. Therefore, the first step side surface portion 211 is formed to have a circular-arc cross section, instead of being formed by bending at a right angle from the first step end surface portion 210.

Where the first step side surface portion 211 is formed by bending at a right angle from the first step end surface portion 210 as in Embodiment 1, the clearance 17 should be set to a value substantially equal to the sheet thickness of the first and second external packaging materials. However, where the clearance 17 is thus set, the actual clearance 17 can become less than the sheet thickness when a displacement appears between the punch 15 and the die 16. Where the clearance 17 thus becomes less than the sheet thickness, the sheet material can be sheared by the punch 15 and the die 16 and a crack can appear in the external packaging materials. Accordingly, in Embodiment 2, when the external packaging materials 2a, 2b are manufactured, the clearance 17 is made greater than the sheet thickness of the first and second external packaging materials 2a, 2b and the first step side surface portion 211 is formed to have a circular-arc cross section, thereby reducing the probability of cracks appearing in the external packaging materials 2a, 2b and enabling the increase in the molding yield of the external packaging materials 2a, 2b. Other features are the same as in Embodiment 1.

With such external packaging materials 2a, 2b for a laminated battery, the connection portion 212 is provided with the second step end surface portion 212a extending along the width direction 3b of the tab 3 from the first step side surface portion 211 so as to correspond to the second tab end surface 37 when the stepped portion 21 is placed on the tab 3, and the tilted portion 212c constituted by the tilted surface that connects the end of the second step end surface portion 212a and the end of the joining portion 20. Therefore, even when the thickness t₃ of the film protrusion 32 is small, the shape of the connection portion 212 can be frozen more reliably and the occurrence of springback in the connection portion 212 can be avoided. As a result, the appearance of the gap 10 between the first and second external packaging materials 2a, 2b and the tab 3 can be avoided more reliably.

Further, with such external packaging materials 2a, 2b for a laminated battery and a manufacturing method therefor, the first step side surface portion 211 is formed to have a circular-arc cross section by making the clearance 17 between the punch side wall surface 15a and the die side wall surface 16a larger than the sheet thickness of the external packaging material. Therefore, the probability of a crack appearing in the external packaging materials 2a, 2b can be reduced and the molding yield of the external packaging materials 2a, 2b can be increased.

### Embodiment 3

FIG. 15 is a cross-sectional view of the stepped portion 21 provided at the external packaging materials 2a, 2b of the laminated battery according to Embodiment 3 of the present invention. The components identical or similar to those of the configurations of Embodiments 1 and 2 are explained by using like reference numerals. In Embodiment 2, the connection portion 212 is configured by the second step end surface portion 212a and the tilted portion 212c (see FIG. 12), but the second step end surface portion 212a may be omitted and the connection portion 212 may be configured only by the tilted portion 212c as shown in FIG. 15. When the connection portion 212 is configured only by the tilted portion 212c, the maximum stretch-out amount of the tilted portion 212c with respect to the joining portion 20 is taken as (t₃/2) - β. Other features are the same as in Embodiments 1 and 2.

FIG. 16 is a cross-sectional view of the circumference of the stepped portion 21 in the case in which the first and second external packaging materials 2a, 2b are used at which the stepped portion 21 shown in FIG. 15 has been formed. As shown in FIG. 16(a), at a stage before the heat sealing step S2 is implemented, the gap 10 appears between the tilted portion 212c and the film protrusion 32. However, since the maximum stretch-out amount of the tilted portion 212c with respect to the joining portion 20 is taken as (t₃/2 - β), the surface area of a triangle having the tilted portion 212c of the first external packaging material 2a and the tilted portion 212c of the second external packaging material 2b as two sides is less than the cross-sectional area of the film protrusion 32. Therefore, as shown in FIG. 16(b), where heat sealing is implemented, the space in the triangle having the tilted portions 212c of the first and second external packaging material 2a, 2b as two sides is filled with the molten film protrusion 32. Thus, the appearance of the gap 10 can be avoided and the sealability of the battery case 2 can be ensured also with the stepped portion 21 of the present embodiment.

As explained in Embodiment 2, a larger portion of the melt of the film protrusion 32 that has not been accommodated in the aforementioned space is pushed inside or outside of the battery case 2 along the extension direction 3c of the tab 3, without penetrating between the joining portions 20.

With such external packaging materials 2a, 2b for a laminated battery, since the connection portion 212 is the tilted portion 212c constituted by the tilted surface connecting the end of the joining portion 20 and the end of the first step side surface portion 211, the shape of the connection portion 212 can be frozen more reliably and the occurrence of springback in the connection portion 212 can be avoided even when the thickness t₃ of the film protrusion 32 is small. As a result, the appearance of the gap 10 between the first and second external packaging materials 2a, 2b and the tab 3 can be avoided more reliably.

## Claims

1. An external packaging material for a laminated battery, which is one of two external packaging materials constituting a battery case (2) accommodating a battery element (1), and is configured by a stainless steel sheet (5) provided with a resin layer (6), the battery case (2) being formed by fusing together the resin layers (6) in a state in which tabs (3) connected to the battery element (1) are disposed between the two external packaging materials,
**characterized by** a stepped portion (21) conforming to a cross-sectional shape of each of the tabs (3) at a position where the tab (3) is inserted between the two external packaging materials is formed in advance before the tab (3) is inserted, wherein
the tab (3) has, at a position where the tab (3) is inserted between the external packaging materials, first tab end surfaces (35) extending along a width direction (3b) of the tab (3), first tab side surfaces (36) extending along a thickness direction (3a) of the tab (3) from end portions of the first tab end surfaces (35), second tab end surfaces (37) extending along the width direction (3b) of the tab (3) from end portions of the first tab side surfaces (36), and second tab side surfaces (38) extending along the thickness direction (3a) of the tab (3) from end portions of the second tab end surfaces (37), and
the stepped portion (21) is provided with:
a first step end surface portion (210) extending along the width direction (3b) of the tab (3) so as to correspond to each of the first tab end surfaces (35) when the stepped portion (21) is placed on the tab (3);
a first step side surface portion (211) extending along the thickness direction (3a) of the tab (3) from an end of the first step end surface portion (210) so as to correspond to each of the first tab side surfaces (36) when the stepped portion (21) is placed on the tab (3); and
a connection portion (212) connecting an end of the first step side surface portion (211) and an end of a joining portion (20) extending along the width direction (3b) of the tab (3) from a position outside the second tab side surface (38) following the width direction (3b) of the tab (3), which is a position set apart, along the width direction (3b) and thickness direction (3a) of the tab (3), from an end of the first step side surface portion (211), when the stepped portion (21) is placed on the tab (3), and wherein
the connection portion (212) is provided with:
a second step end surface portion (212a) extending along the width direction (3b) of the tab (3) from the end of the first step side surface portion (211) so as to correspond to each of the second tab end surfaces (37) when the stepped portion (21) is placed on the tab (3); and
a tilted portion (212c) constituted by a tilted surface connecting an end of the second step end surface portion (212a) and an end of the joining portion (20).

2. The external packaging material for a laminated battery according to claim 1, wherein
the first step side surface portion (211) is formed to have a circular-arc cross section.

3. An external packaging material for a laminated battery, which is one of two external packaging materials constituting a battery case (2) accommodating a battery element (1), and is configured by a stainless steel sheet (5) provided with a resin layer (6), the battery case (2) being formed by fusing together the resin layers (6) in a state in which tabs (3) connected to the battery element (1) are disposed between the two external packaging materials,
**characterized by** a stepped portion (21) conforming to a cross-sectional shape of each of the tabs (3) at a position where the tab (3) is inserted between the two external packaging materials is formed in advance before the tab (3) is inserted, wherein
the tab (3) has, at a position where the tab (3) is inserted between the external packaging materials, first tab end surfaces (35) extending along a width direction (3b) of the tab (3), first tab side surfaces (36) extending along a thickness direction (3a) of the tab (3) from end portions of the first tab end surfaces (35), second tab end surfaces (37) extending along the width direction (3b) of the tab (3) from end portions of the first tab side surfaces (36), and second tab side surfaces (38) extending along the thickness direction (3a) of the tab (3) from end portions of the second tab end surfaces (37), and
the stepped portion (21) is provided with:
a first step end surface portion (210) extending along the width direction (3b) of the tab (3) so as to correspond to each of the first tab end surfaces (35) when the stepped portion (21) is placed on the tab (3);
a first step side surface portion (211) extending along the thickness direction (3a) of the tab (3) from an end of the first step end surface portion (210) so as to correspond to each of the first tab side surfaces (36) when the stepped portion (21) is placed on the tab (3); and
a connection portion (212) connecting an end of the first step side surface portion (211) and an end of a joining portion (20) extending along the width direction (3b) of the tab (3) from a position outside the second tab side surface (38) following the width direction (3b) of the tab (3), which is a position set apart, along the width direction (3b) and thickness direction (3a) of the tab (3), from an end of the first step side surface portion (211), when the stepped portion (21) is placed on the tab (3), and wherein the connection portion (212) is a tilted portion (212c) constituted by a tilted surface connecting an end of the joining portion (20) and the end of the first step side surface portion (211).

4. The external packaging material for a laminated battery according to claim 3, wherein
the first step side surface portion (211) is formed to have a circular-arc cross section.

5. A manufacturing method for a laminated battery in which a heat sealing step is implemented by applying heat to first and second external packaging materials (2a, 2b) configured by a pair of stainless steel sheets (5) each provided with a resin layer (6), while pressing the first and second external packaging materials (2a, 2b) against each other, in a state in which tabs (3) connected to a battery element (1) are disposed between the first and second external packaging materials (2a, 2b), whereby the resin layers (6) of the first and second external packaging materials (2a, 2b) are fused together in a state in which the tabs (3) are inserted between the first and second external packaging materials (2a, 2b),
wherein a stepped portion (21) conforming to a cross-sectional shape of each of the tabs (3) at a position where the tab (3) is inserted between the first and second external packaging materials (2a, 2b) is formed in advance in at least one of the first and second external packaging materials (2a, 2b), before the tab (3) is inserted between the first and second external packaging materials (2a, 2b),
wherein
the tab (3) has, at a position where the tab (3) is inserted between the external packaging materials, first tab end surfaces (35) extending along a width direction (3b) of the tab (3), first tab side surfaces (36) extending along a thickness direction (3a) of the tab (3) from end portions of the first tab end surfaces (35), second tab end surfaces (37) extending along the width direction (3b) of the tab (3) from end portions of the first tab side surfaces (36), and second tab side surfaces (38) extending along the thickness direction (3a) of the tab (3) from end portions of the second tab end surfaces (37), and
the stepped portion (21) is provided with:
a first step end surface portion (210) extending along the width direction (3b) of the tab (3) so as to correspond to each of the first tab end surfaces (35) when the stepped portion (21) is placed on the tab (3);
a first step side surface portion (211) extending along the thickness direction (3a) of the tab (3) from an end of the first step end surface portion (210) so as to correspond to each of the first tab side surfaces (36) when the stepped portion (21) is placed on the tab (3); and
a connection portion (212) connecting an end of the first step side surface portion (211) and an end of a joining portion (20) extending along the width direction (3b) of the tab (3) from a position outside the second tab side surface (38) following the width direction (3b) of the tab (3), which is a position set apart, along the width direction (3b) and thickness direction (3a) of the tab (3), from an end of the first step side surface portion (211), when the stepped portion (21) is placed on the tab (3), and wherein
the connection portion (212) is provided with:
a second step end surface portion (212a) extending along the width direction (3b) of the tab (3) from the end of the first step side surface portion (211) so as to correspond to each of the second tab end surfaces (37) when the stepped portion (21) is placed on the tab (3); and
a tilted portion (212c) constituted by a tilted surface connecting an end of the second step end surface portion (212a) and an end of the joining portion (20).

6. A manufacturing method for a laminated battery in which a heat sealing step is implemented by applying heat to first and second external packaging materials (2a, 2b) configured by a pair of stainless steel sheets (5) each provided with a resin layer (6), while pressing the first and second external packaging materials (2a, 2b) against each other, in a state in which tabs (3) connected to a battery element (1) are disposed between the first and second external packaging materials (2a, 2b), whereby the resin layers (6) of the first and second external packaging materials (2a, 2b) are fused together in a state in which the tabs (3) are inserted between the first and second external packaging materials (2a, 2b),
wherein a stepped portion (21) conforming to a cross-sectional shape of each of the tabs (3) at a position where the tab (3) is inserted between the first and second external packaging materials (2a, 2b) is formed in advance in at least one of the first and second external packaging materials (2a, 2b), before the tab (3) is inserted between the first and second external packaging materials (2a, 2b),
wherein
the tab (3) has, at a position where the tab (3) is inserted between the external packaging materials, first tab end surfaces (35) extending along a width direction (3b) of the tab (3), first tab side surfaces (36) extending along a thickness direction (3a) of the tab (3) from end portions of the first tab end surfaces (35), second tab end surfaces (37) extending along the width direction (3b) of the tab (3) from end portions of the first tab side surfaces (36), and second tab side surfaces (38) extending along the thickness direction (3a) of the tab (3) from end portions of the second tab end surfaces (37), and
the stepped portion (21) is provided with:
a first step end surface portion (210) extending along the width direction (3b) of the tab (3) so as to correspond to each of the first tab end surfaces (35) when the stepped portion (21) is placed on the tab (3);
a first step side surface portion (211) extending along the thickness direction (3a) of the tab (3) from an end of the first step end surface portion (210) so as to correspond to each of the first tab side surfaces (36) when the stepped portion (21) is placed on the tab (3); and
a connection portion (212) connecting an end of the first step side surface portion (211) and an end of a joining portion (20) extending along the width direction (3b) of the tab (3) from a position outside the second tab side surface (38) following the width direction (3b) of the tab (3), which is a position set apart, along the width direction (3b) and thickness direction (3a) of the tab (3), from an end of the first step side surface portion (211), when the stepped portion (21) is placed on the tab (3), and wherein the connection portion (212) is a tilted portion (212c) constituted by a tilted surface connecting an end of the joining portion (20) and the end of the first step side surface portion (211).

## Patentansprüche

1. Äußeres Verpackungsmaterial für eine laminierte Batterie, das eines von zwei äußeren Verpackungsmaterialien ist, die ein Batteriegehäuse (2) bilden, das ein Batterieelement (1) aufnimmt, und das durch ein Edelstahlblech (5) mit einer Harzschicht (6) gebildet ist, wobei das Batteriegehäuse (2) durch Verschmelzen der Harzschichten (6) in einem Zustand gebildet wird, in dem mit dem Batterieelement (1) verbundene Laschen (3) zwischen den zwei äußeren Verpackungsmaterialien angeordnet sind,
**gekennzeichnet durch** einen abgestuften Abschnitt (21), der einer Querschnittsform jeder der Laschen (3) an einer Position entspricht, an der die Lasche (3) zwischen den zwei äußeren Verpackungsmaterialien eingesetzt ist, wobei der abgestufte Abschnitt (21) gebildet ist, bevor die Lasche (3) eingefügt wird, wobei
die Lasche (3) an der Position, an der die Lasche (3) zwischen den äußeren Verpackungsmaterialien eingefügt wird, erste Laschenendflächen (35), die sich entlang einer Breitenrichtung (3b) der Lasche (3) erstrecken, erste Laschenseitenflächen (36), die sich entlang einer Dickenrichtung (3a) der Lasche (3) von Endabschnitten der ersten Laschenendflächen (35) erstrecken, zweite Laschenendflächen (37), die sich entlang der Breitenrichtung (3b) der Lasche (3) von Endabschnitten der ersten Laschenseitenflächen (36) erstrecken, und zweite Laschenseitenflächen (38), die sich entlang der Dickenrichtung (3a) der Lasche (3) von Endabschnitten der zweiten Laschenendflächen (37) erstrecken, aufweist, und
der abgestufte Abschnitt (21) aufweist:
einen ersten Stufenendflächenabschnitt (210), der sich entlang der Breitenrichtung (3b) der Lasche (3) erstreckt, um so jeder ersten Laschenendfläche (35) zu entsprechen, wenn der abgestufte Abschnitt (21) auf der Lasche (3) platziert ist;
einen ersten Stufenseitenflächenabschnitt (211), der sich von einem Ende des ersten Stufenendflächenabschnitts (210) entlang der Dickenrichtung (3a) der Lasche (3) erstreckt, um so jeder ersten Laschenseitenfläche (36) zu entsprechen, wenn der abgestufte Abschnitt (21) auf der Lasche (3) platziert ist; und
einen Verbindungsabschnitt (212), der ein Ende des ersten Stufenseitenflächenabschnitts (211) und ein Ende eines Verknüpfungsabschnitts (20) verbindet, wobei sich der Verknüpfungsabschnitt (20) entlang der Breitenrichtung (3b) der Lasche (3) von einer Position außerhalb der zweiten Laschenseitenfläche (38) entlang der Breitenrichtung (3b) der Lasche (3), wobei die Position eine Position entlang der Breitenrichtung (3b) und Dickenrichtung (3a) der Lasche (3) neben einem Ende des ersten Stufenseitenflächenabschnitts (211) ist, erstreckt, wenn der abgestufte Abschnitt (21) auf der Lasche (3) platziert ist; und wobei
der Verbindungsabschnitt (212) aufweist:
einen zweiten Stufenendflächenabschnitt (212a), der sich entlang der Breitenrichtung (3b) der Lasche (3) vom Ende des ersten Stufenseitenflächenabschnitts (211) erstreckt, um so jeder zweiten Laschenendfläche (37) zu entsprechen, wenn der abgestufte Abschnitt (21) auf der Lasche (3) platziert ist; und
einen geneigten Abschnitt (212c), der durch eine geneigte Fläche gebildet ist, die ein Ende des zweiten Stufenendflächenabschnitts (212a) und ein Ende des Verknüpfungsabschnitts (20) verbindet.

2. Äußeres Verpackungsmaterial für eine laminierte Batterie nach Anspruch 1, wobei der erste Stufenseitenflächenabschnitt (211) so ausgebildet ist, dass er einen kreisbogenförmigen Querschnitt aufweist.

3. Äußeres Verpackungsmaterial für eine laminierte Batterie, das eines von zwei äußeren Verpackungsmaterialien ist, die ein Batteriegehäuse (2) bilden, das ein Batterieelement (1) aufnimmt, und das durch ein Edelstahlblech (5) mit einer Harzschicht (6) gebildet ist, wobei das Batteriegehäuse (2) durch Verschmelzen der Harzschichten (6) in einem Zustand gebildet wird, in dem mit dem Batterieelement (1) verbundene Laschen (3) zwischen den zwei äußeren Verpackungsmaterialien angeordnet sind,
**gekennzeichnet durch** einen abgestuften Abschnitt (21), der einer Querschnittsform jeder der Laschen (3) an einer Position entspricht, an der die Lasche (3) zwischen den zwei äußeren Verpackungsmaterialien eingesetzt ist, wobei der abgestufte Abschnitt (21) gebildet ist, bevor die Lasche (3) eingefügt wird, wobei
die Lasche (3) an der Position, an der die Lasche (3) zwischen den äußeren Verpackungsmaterialien eingefügt wird, erste Laschenendflächen (35), die sich entlang einer Breitenrichtung (3b) der Lasche (3) erstrecken, erste Laschenseitenflächen (36), die sich entlang einer Dickenrichtung (3a) der Lasche (3) von Endabschnitten der ersten Laschenendflächen (35) erstrecken, zweite Laschenendflächen (37), die sich entlang der Breitenrichtung (3b) der Lasche (3) von Endabschnitten der ersten Laschenseitenflächen (36) erstrecken, und zweite Laschenseitenflächen (38), die sich entlang der Dickenrichtung (3a) der Lasche (3) von Endabschnitten der zweiten Laschenendflächen (37) erstrecken, aufweist, und
der abgestufte Abschnitt (21) aufweist:
einen ersten Stufenendflächenabschnitt (210), der sich entlang der Breitenrichtung (3b) der Lasche (3) erstreckt, um so jeder ersten Laschenendfläche (35) zu entsprechen, wenn der abgestufte Abschnitt (21) auf der Lasche (3) platziert ist;
einen ersten Stufenseitenflächenabschnitt (211), der sich von einem Ende des ersten Stufenendflächenabschnitts (210) entlang der Dickenrichtung (3a) der Lasche (3) erstreckt, um so jeder ersten Laschenseitenfläche (36) zu entsprechen, wenn der abgestufte Abschnitt (21) auf der Lasche (3) platziert ist; und
einen Verbindungsabschnitt (212), der ein Ende des ersten Stufenseitenflächenabschnitts (211) und ein Ende eines Verknüpfungsabschnitts (20) verbindet, wobei sich der Verknüpfungsabschnitt (20) entlang der Breitenrichtung (3b) der Lasche (3) von einer Position außerhalb der zweiten Laschenseitenfläche (38) entlang der Breitenrichtung (3b) der Lasche (3), wobei die Position eine Position entlang der Breitenrichtung (3b) und Dickenrichtung (3a) der Lasche (3) neben einem Ende des ersten Stufenseitenflächenabschnitts (211) ist, erstreckt, wenn der abgestufte Abschnitt (21) auf der Lasche (3) platziert ist, und wobei der Verbindungsabschnitt (212) ein geneigter Abschnitt (212c) ist, der durch eine geneigte Fläche gebildet ist, die ein Ende des Verknüpfungsabschnitts (20) und das Ende des ersten Stufenseitenflächenabschnitts (211) verbindet.

4. Äußeres Verpackungsmaterial für eine laminierte Batterie nach Anspruch 3, wobei der erste Stufenseitenflächenabschnitt (211) so ausgebildet ist, dass er einen kreisbogenförmigen Querschnitt aufweist.

5. Herstellungsverfahren für eine laminierte Batterie, bei dem ein Heißsiegelschritt durch Anwenden von Wärme auf ein erstes und ein zweites äußeres Verpackungsmaterial (2a, 2b), die durch ein Paar rostfreier Stahlbleche (5), die jeweils mit einer Harzschicht (6) versehen sind, gebildet sind, ausgeführt wird, während das erste und zweite äußere Verpackungsmaterial (2a, 2b) in einem Zustand gegeneinander gedrückt werden, in dem mit einem Batterieelement (1) verbundene Laschen (3) zwischen dem ersten und zweiten äußeren Verpackungsmaterial (2a, 2b) angeordnet sind, wodurch die Harzschichten (6) des ersten und zweiten äußeren Verpackungsmaterials (2a, 2b) in einem Zustand zusammengeschmolzen werden, in dem die Laschen (3) zwischen dem ersten und zweiten äußeren Verpackungsmaterial (2a, 2b) eingefügt sind,
wobei ein abgestufter Abschnitt (21), der einer Querschnittsform jeder der Laschen (3) an einer Position entspricht, an der die Lasche (3) zwischen dem ersten und zweiten äußeren Verpackungsmaterial (2a, 2b) eingefügt ist, und der Abschnitt (21) im ersten und/oder zweiten äußeren Verpackungsmaterial (2a, 2b) gebildet wird, bevor die Lasche (3) zwischen dem ersten und zweiten äußeren Verpackungsmaterial (2a, 2b) eingefügt wird,
wobei
die Lasche (3) an der Position, an der die Lasche (3) zwischen den äußeren Verpackungsmaterialien eingefügt wird, erste Laschenendflächen (35), die sich entlang einer Breitenrichtung (3b) der Lasche (3) erstrecken, erste Laschenseitenflächen (36), die sich entlang einer Dickenrichtung (3a) der Lasche (3) von Endabschnitten der ersten Laschenendflächen (35) erstrecken, zweite Laschenendflächen (37), die sich entlang der Breitenrichtung (3b) der Lasche (3) von Endabschnitten der ersten Laschenseitenflächen (36) erstrecken, und zweite Laschenseitenflächen (38), die sich entlang der Dickenrichtung (3a) der Lasche (3) von Endabschnitten der zweiten Laschenendflächen (37) erstrecken, aufweist, und
der abgestufte Abschnitt (21) aufweist:
einen ersten Stufenendflächenabschnitt (210), der sich entlang der Breitenrichtung (3b) der Lasche (3) erstreckt, um so jeder ersten Laschenendfläche (35) zu entsprechen, wenn der abgestufte Abschnitt (21) auf der Lasche (3) platziert wird;
einen ersten Stufenseitenflächenabschnitt (211), der sich von einem Ende des ersten Stufenendflächenabschnitts (210) entlang der Dickenrichtung (3a) der Lasche (3) erstreckt, um so jeder ersten Laschenseitenfläche (36) zu entsprechen, wenn der abgestufte Abschnitt (21) auf der Lasche (3) platziert wird; und
einen Verbindungsabschnitt (212), der ein Ende des ersten Stufenseitenflächenabschnitts (211) und ein Ende eines Verknüpfungsabschnitts (20) verbindet, wobei sich der Verknüpfungsabschnitt (20) entlang der Breitenrichtung (3b) der Lasche (3) von einer Position außerhalb der zweiten Laschenseitenfläche (38) entlang der Breitenrichtung (3b) der Lasche (3), wobei die Position eine Position entlang der Breitenrichtung (3b) und Dickenrichtung (3a) der Lasche (3) neben einem Ende des ersten Stufenseitenflächenabschnitts (211) ist, erstreckt, wenn der abgestufte Abschnitt (21) auf der Lasche (3) platziert wird; und wobei
der Verbindungsabschnitt (212) aufweist:
einen zweiten Stufenendflächenabschnitt (212a), der sich entlang der Breitenrichtung (3b) der Lasche (3) vom Ende des ersten Stufenseitenflächenabschnitts (211) erstreckt, um so jeder zweiten Laschenendfläche (37) zu entsprechen, wenn der abgestufte Abschnitt (21) auf der Lasche (3) platziert wird; und
einen geneigten Abschnitt (212c), der durch eine geneigte Fläche gebildet ist, die ein Ende des zweiten Stufenendflächenabschnitts (212a) und ein Ende des Verknüpfungsabschnitts (20) verbindet.

6. Herstellungsverfahren für eine laminierte Batterie, bei dem ein Heißsiegelschritt durch Anwenden von Wärme auf ein erstes und ein zweites äußeres Verpackungsmaterial (2a, 2b), die durch ein Paar rostfreier Stahlbleche (5), die jeweils mit einer Harzschicht (6) versehen sind, gebildet sind, ausgeführt wird, während das erste und zweite äußere Verpackungsmaterial (2a, 2b) in einem Zustand gegeneinander gedrückt werden, in dem mit einem Batterieelement (1) verbundene Laschen (3) zwischen dem ersten und zweiten äußeren Verpackungsmaterial (2a, 2b) angeordnet sind, wodurch die Harzschichten (6) des ersten und zweiten äußeren Verpackungsmaterials (2a, 2b) in einem Zustand zusammengeschmolzen werden, in dem die Laschen (3) zwischen dem ersten und zweiten äußeren Verpackungsmaterial (2a, 2b) eingefügt werden,
wobei ein abgestufter Abschnitt (21), der einer Querschnittsform jeder der Laschen (3) an einer Position entspricht, an der die Lasche (3) zwischen den ersten und zweiten äußeren Verpackungsmaterialien (2a, 2b) eingefügt ist, und der Abschnitt (21) in den ersten und/oder zweiten äußeren Verpackungsmaterialien gebildet wird, bevor die Lasche (3) zwischen den ersten und zweiten äußeren Verpackungsmaterialien (2a, 2b) eingefügt wird,
wobei
die Lasche (3) an der Position, an der die Lasche (3) zwischen den äußeren Verpackungsmaterialien eingefügt wird, erste Laschenendflächen (35), die sich entlang einer Breitenrichtung (3b) der Lasche (3) erstrecken, erste Laschenseitenflächen (36), die sich entlang einer Dickenrichtung (3a) der Lasche (3) von Endabschnitten der ersten Laschenendflächen (35) erstrecken, zweite Laschenendflächen (37), die sich entlang der Breitenrichtung (3b) der Lasche (3) von Endabschnitten der ersten Laschenseitenflächen (36) erstrecken, und zweite Laschenseitenflächen (38), die sich entlang der Dickenrichtung (3a) der Lasche (3) von Endabschnitten der zweiten Laschenendflächen (37) erstrecken, aufweist, und
der abgestufte Abschnitt (21) aufweist:
einen ersten Stufenendflächenabschnitt (210), der sich entlang der Breitenrichtung (3b) der Lasche (3) erstreckt, um so jeder ersten Laschenendfläche (35) zu entsprechen, wenn der abgestufte Abschnitt (21) auf der Lasche (3) platziert wird;
einen ersten Stufenseitenflächenabschnitt (211), der sich von einem Ende des ersten Stufenendflächenabschnitts (210) entlang der Dickenrichtung (3a) der Lasche (3) erstreckt, um so jeder ersten Laschenseitenfläche (36) zu entsprechen, wenn der abgestufte Abschnitt (21) auf der Lasche (3) platziert wird; und
einen Verbindungsabschnitt (212), der ein Ende des ersten Stufenseitenflächenabschnitts (211) und ein Ende eines Verknüpfungsabschnitts (20) verbindet, wobei sich der Verknüpfungsabschnitt (20) entlang der Breitenrichtung (3b) der Lasche (3) von einer Position außerhalb der zweiten Laschenseitenfläche (38) entlang der Breitenrichtung (3b) der Lasche (3), wobei die Position eine Position entlang der Breitenrichtung (3b) und Dickenrichtung (3a) der Lasche (3) neben einem Ende des ersten Stufenseitenflächenabschnitts (211) ist, erstreckt, wenn der abgestufte Abschnitt (21) auf der Lasche (3) platziert wird, und wobei der Verbindungsabschnitt (212) ein geneigter Abschnitt (212c) ist, der durch eine geneigte Fläche gebildet ist, die ein Ende des Verknüpfungsabschnitts (20) und das Ende des ersten Stufenseitenflächenabschnitts (211) verbindet.

## Revendications

1. Matériau d'emballage extérieur pour une batterie stratifiée, qui est l'un des deux matériaux d'emballage extérieurs constituant une enveloppe de batterie (2) recevant un élément formant batterie (1), et est configuré par une feuille d'acier inoxydable (5) dotée d'une couche de résine (6), l'enveloppe de batterie (2) étant formée en liant l'une à l'autre les couches de résine (6) par fusion dans un état dans lequel des pattes (3) raccordées à l'élément formant batterie (1) sont disposées entre les deux matériaux d'emballage extérieurs,
**caractérisé en ce qu'**une partie étagée (21) épousant une forme en section transversale de chacune des pattes (3), à un emplacement où la patte (3) est insérée entre les deux matériaux d'emballage extérieurs, est formée à l'avance avant que la patte (3) soit insérée,
la patte (3) comportant, à un emplacement où la patte (3) est insérée entre les matériaux d'emballage extérieurs, des premières surfaces d'extrémité de patte (35) s'étendant le long d'une direction de largeur (3b) de la patte (3), des premières surfaces latérales de patte (36) s'étendant le long d'une direction d'épaisseur (3a) de la patte (3) à partir de parties d'extrémité des premières surfaces d'extrémité de patte (35), des secondes surfaces d'extrémité de patte (37) s'étendant le long de la direction de largeur (3b) de la patte (3) à partir de parties d'extrémité des premières surfaces latérales de patte (36), et des secondes surfaces latérales de patte (38) s'étendant le long de la direction d'épaisseur (3a) de la patte (3) à partir de parties d'extrémité des secondes surfaces d'extrémité de patte (37), et
la partie étagée (21) étant pourvue de :
une partie de surface d'extrémité de premier étage (210) s'étendant le long de la direction de largeur (3b) de la patte (3) de façon à correspondre à chacune des premières surfaces d'extrémité de patte (35) lorsque la partie étagée (21) est placée sur la patte (3) ;
une partie de surface latérale de premier étage (211) s'étendant le long de la direction d'épaisseur (3a) de la patte (3) à partir d'une extrémité de la partie de surface d'extrémité de premier étage (210) de façon à correspondre à chacune des premières surfaces latérales de patte (36) lorsque la partie étagée (21) est placée sur la patte (3) ; et
une partie de raccordement (212) raccordant une extrémité de la partie de surface latérale de premier étage (211) et une extrémité d'une partie d'assemblage (20) s'étendant le long de la direction de largeur (3b) de la patte (3) à partir d'un emplacement situé à l'extérieur de la seconde surface latérale de patte (38) suivant la direction de largeur (3b) de la patte (3), qui est un emplacement à l'écart, le long de la direction de largeur (3b) et de la direction d'épaisseur (3a) de la patte (3), d'une extrémité de la partie de surface latérale de premier étage (211), lorsque la partie étagée (21) est placée sur la patte (3), et la partie de raccordement (212) étant pourvue de : une partie de surface d'extrémité de second étage (212a) s'étendant le long de la direction de largeur (3b) de la patte (3) à partir de l'extrémité de la partie de surface latérale de premier étage (211) de façon à correspondre à chacune des secondes surfaces d'extrémité de patte (37) lorsque la partie étagée (21) est placée sur la patte (3) ; et
une partie inclinée (212c) constituée par une surface inclinée raccordant une extrémité de la partie de surface d'extrémité de second étage (212a) et une extrémité de la partie d'assemblage (20).

2. Matériau d'emballage extérieur pour une batterie stratifiée selon la revendication 1, dans lequel la partie de surface latérale de premier étage (211) est formée de façon à présenter une section transversale en forme d'arc de cercle.

3. Matériau d'emballage extérieur pour une batterie stratifiée, qui est l'un des deux matériaux d'emballage extérieurs constituant une enveloppe de batterie (2) recevant un élément formant batterie (1), et est configuré par une feuille d'acier inoxydable (5) dotée d'une couche de résine (6), l'enveloppe de batterie (2) étant formée en liant l'une à l'autre les couches de résine (6) par fusion dans un état dans lequel des pattes (3) raccordées à l'élément formant batterie (1) sont disposées entre les deux matériaux d'emballage extérieurs,
**caractérisé en ce qu'**une partie étagée (21) épousant une forme en section transversale de chacune des pattes (3), à un emplacement où la patte (3) est insérée entre les deux matériaux d'emballage extérieurs, est formée à l'avance avant que la patte (3) soit insérée,
la patte (3) comportant, à un emplacement où la patte (3) est insérée entre les matériaux d'emballage extérieurs, des premières surfaces d'extrémité de patte (35) s'étendant le long d'une direction de largeur (3b) de la patte (3), des premières surfaces latérales de patte (36) s'étendant le long d'une direction d'épaisseur (3a) de la patte (3) à partir de parties d'extrémité des premières surfaces d'extrémité de patte (35), des secondes surfaces d'extrémité de patte (37) s'étendant le long de la direction de largeur (3b) de la patte (3) à partir de parties d'extrémité des premières surfaces latérales de patte (36), et des secondes surfaces latérales de patte (38) s'étendant le long de la direction d'épaisseur (3a) de la patte (3) à partir de parties d'extrémité des secondes surfaces d'extrémité de patte (37), et
la partie étagée (21) étant pourvue de :
une partie de surface d'extrémité de premier étage (210) s'étendant le long de la direction de largeur (3b) de la patte (3) de façon à correspondre à chacune des premières surfaces d'extrémité de patte (35) lorsque la partie étagée (21) est placée sur la patte (3) ;
une partie de surface latérale de premier étage (211) s'étendant le long de la direction d'épaisseur (3a) de la patte (3) à partir d'une extrémité de la partie de surface d'extrémité de premier étage (210) de façon à correspondre à chacune des premières surfaces latérales de patte (36) lorsque la partie étagée (21) est placée sur la patte (3) ; et
une partie de raccordement (212) raccordant une extrémité de la partie de surface latérale de premier étage (211) et une extrémité d'une partie d'assemblage (20) s'étendant le long de la direction de largeur (3b) de la patte (3) à partir d'un emplacement situé à l'extérieur de la seconde surface latérale de patte (38) suivant la direction de largeur (3b) de la patte (3), qui est un emplacement à l'écart, le long de la direction de largeur (3b) et de la direction d'épaisseur (3a) de la patte (3), d'une extrémité de la partie de surface latérale de premier étage (211), lorsque la partie étagée (21) est placée sur la patte (3), et la partie de raccordement (212) étant une partie inclinée (212c) constituée par une surface inclinée raccordant une extrémité de la partie d'assemblage (20) et l'extrémité de la partie de surface latérale de premier étage (211).

4. Matériau d'emballage extérieur pour une batterie stratifiée selon la revendication 3, dans lequel la partie de surface latérale de premier étage (211) est formée de façon à présenter une section transversale en forme d'arc de cercle.

5. Procédé de fabrication pour une batterie stratifiée dans lequel une étape de thermosoudage est réalisée en appliquant de la chaleur à des premier et second matériaux d'emballage extérieurs (2a, 2b) configurés par une paire de feuilles d'acier inoxydable (5) pourvues chacune d'une couche de résine (6), tout en pressant les premier et second matériaux d'emballage extérieurs (2a, 2b) l'un contre l'autre, dans un état dans lequel des pattes (3) raccordées à un élément formant batterie (1) sont disposées entre les premier et second matériaux d'emballage extérieurs (2a, 2b), les couches de résine (6) des premier et second matériaux d'emballage extérieurs (2a, 2b) étant ainsi liées l'une à l'autre par fusion dans un état dans lequel les pattes (3) sont insérées entre les premier et second matériaux d'emballage extérieurs (2a, 2b), une partie étagée (21) épousant une forme en section transversale de chacune des pattes (3), à un emplacement où la patte (3) est insérée entre les premier et second matériaux d'emballage extérieurs (2a, 2b), étant formée à l'avance dans au moins un des premier et second matériaux d'emballage extérieurs (2a, 2b), avant que la patte (3) soit insérée entre les premier et second matériaux d'emballage extérieurs (2a, 2b),
la patte (3) comportant, à un emplacement où la patte (3) est insérée entre les matériaux d'emballage extérieurs, des premières surfaces d'extrémité de patte (35) s'étendant le long d'une direction de largeur (3b) de la patte (3), des premières surfaces latérales de patte (36) s'étendant le long d'une direction d'épaisseur (3a) de la patte (3) à partir de parties d'extrémité des premières surfaces d'extrémité de patte (35), des secondes surfaces d'extrémité de patte (37) s'étendant le long de la direction de largeur (3b) de la patte (3) à partir de parties d'extrémité des premières surfaces latérales de patte (36), et des secondes surfaces latérales de patte (38) s'étendant le long de la direction d'épaisseur (3a) de la patte (3) à partir de parties d'extrémité des secondes surfaces d'extrémité de patte (37), et
la partie étagée (21) étant pourvue de :
une partie de surface d'extrémité de premier étage (210) s'étendant le long de la direction de largeur (3b) de la patte (3) de façon à correspondre à chacune des premières surfaces d'extrémité de patte (35) lorsque la partie étagée (21) est placée sur la patte (3) ;
une partie de surface latérale de premier étage (211) s'étendant le long de la direction d'épaisseur (3a) de la patte (3) à partir d'une extrémité de la partie de surface d'extrémité de premier étage (210) de façon à correspondre à chacune des premières surfaces latérales de patte (36) lorsque la partie étagée (21) est placée sur la patte (3) ; et
une partie de raccordement (212) raccordant une extrémité de la partie de surface latérale de premier étage (211) et une extrémité d'une partie d'assemblage (20) s'étendant le long de la direction de largeur (3b) de la patte (3) à partir d'un emplacement situé à l'extérieur de la seconde surface latérale de patte (38) suivant la direction de largeur (3b) de la patte (3), qui est un emplacement à l'écart, le long de la direction de largeur (3b) et de la direction d'épaisseur (3a) de la patte (3), d'une extrémité de la partie de surface latérale de premier étage (211), lorsque la partie étagée (21) est placée sur la patte (3), et la partie de raccordement (212) étant pourvue de : une partie de surface d'extrémité de second étage (212a) s'étendant le long de la direction de largeur (3b) de la patte (3) à partir de l'extrémité de la partie de surface latérale de premier étage (211) de façon à correspondre à chacune des secondes surfaces d'extrémité de patte (37) lorsque la partie étagée (21) est placée sur la patte (3) ; et
une partie inclinée (212c) constituée par une surface inclinée raccordant une extrémité de la partie de surface d'extrémité de second étage (212a) et une extrémité de la partie d'assemblage (20).

6. Procédé de fabrication pour une batterie stratifiée dans lequel une étape de thermosoudage est réalisée en appliquant de la chaleur à des premier et second matériaux d'emballage extérieurs (2a, 2b) configurés par une paire de feuilles d'acier inoxydable (5) pourvues chacune d'une couche de résine (6), tout en pressant les premier et second matériaux d'emballage extérieurs (2a, 2b) l'un contre l'autre, dans un état dans lequel des pattes (3) raccordées à un élément formant batterie (1) sont disposées entre les premier et second matériaux d'emballage extérieurs (2a, 2b), les couches de résine (6) des premier et second matériaux d'emballage extérieurs (2a, 2b) étant ainsi liées l'une à l'autre par fusion dans un état dans lequel les pattes (3) sont insérées entre les premier et second matériaux d'emballage extérieurs (2a, 2b), une partie étagée (21) épousant une forme en section transversale de chacune des pattes (3), à un emplacement où la patte (3) est insérée entre les premier et second matériaux d'emballage extérieurs (2a, 2b), étant formée à l'avance dans au moins un des premier et second matériaux d'emballage extérieurs (2a, 2b), avant que la patte (3) soit insérée entre les premier et second matériaux d'emballage extérieurs (2a, 2b),
la patte (3) comportant, à un emplacement où la patte (3) est insérée entre les matériaux d'emballage extérieurs, des premières surfaces d'extrémité de patte (35) s'étendant le long d'une direction de largeur (3b) de la patte (3), des premières surfaces latérales de patte (36) s'étendant le long d'une direction d'épaisseur (3a) de la patte (3) à partir de parties d'extrémité des premières surfaces d'extrémité de patte (35), des secondes surfaces d'extrémité de patte (37) s'étendant le long de la direction de largeur (3b) de la patte (3) à partir de parties d'extrémité des premières surfaces latérales de patte (36), et des secondes surfaces latérales de patte (38) s'étendant le long de la direction d'épaisseur (3a) de la patte (3) à partir de parties d'extrémité des secondes surfaces d'extrémité de patte (37), et
la partie étagée (21) étant pourvue de :
une partie de surface d'extrémité de premier étage (210) s'étendant le long de la direction de largeur (3b) de la patte (3) de façon à correspondre à chacune des premières surfaces d'extrémité de patte (35) lorsque la partie étagée (21) est placée sur la patte (3) ;
une partie de surface latérale de premier étage (211) s'étendant le long de la direction d'épaisseur (3a) de la patte (3) à partir d'une extrémité de la partie de surface d'extrémité de premier étage (210) de façon à correspondre à chacune des premières surfaces latérales de patte (36) lorsque la partie étagée (21) est placée sur la patte (3) ; et
une partie de raccordement (212) raccordant une extrémité de la partie de surface latérale de premier étage (211) et une extrémité d'une partie d'assemblage (20) s'étendant le long de la direction de largeur (3b) de la patte (3) à partir d'un emplacement situé à l'extérieur de la seconde surface latérale de patte (38) suivant la direction de largeur (3b) de la patte (3), qui est un emplacement à l'écart, le long de la direction de largeur (3b) et de la direction d'épaisseur (3a) de la patte (3), d'une extrémité de la partie de surface latérale de premier étage (211), lorsque la partie étagée (21) est placée sur la patte (3), et la partie de raccordement (212) étant une partie inclinée (212c) constituée par une surface inclinée raccordant une extrémité de la partie d'assemblage (20) et l'extrémité de la partie de surface latérale de premier étage (211).
